# EUROPEAN PATENT APPLICATION

(11) **EP 4 494 439 A1**
(43) Date of publication of application: **22.01.2025**
(21) Application number: 23788003.4
(22) Date of filing: 06.02.2023
(51) Int. Cl.: A01D 34/86

(54) **UNMANNED TRAVELLING WORK MACHINE**

(30) Priority: 13.04.2022 JP 2022066265
(71) Applicant: Yamabiko Corporation, Ohme-shi Tokyo 198-8760 (JP)
(72) Inventor: NAKAI, Yoshihiro, Ohme-shi, Tokyo 198-8760 (JP); FUKUDA, Makoto, Ohme-shi, Tokyo 198-8760 (JP); SAITO, Soya, Ohme-shi, Tokyo 198-8760 (JP); ENDO, Hidemitsu, Ohme-shi, Tokyo 198-8760 (JP)
(74) Representative: Canzler & Bergmeier Patentanwälte Partnerschaft mbB
(86) International application number: PCT/JP2023/003819
(87) International publication number: WO 2023/199580

(57) **Abstract**

The present invention enables an unmanned traveling working machine to travel stably on a slope site even when the center of gravity of a working device is shifted up or down.

The unmanned traveling working machine includes a traveling device remotely controlled to travel, a machine body configured to support the traveling device, a working device located at the center of the machine body and configured to be able to shift its center of gravity up and down, and heavy components provided dispersedly in the front side and the rear side of the machine body and serve as drive sources of the traveling device and the working device.

## Description

### Technical field

The present invention relates to an unmanned traveling working machine.

### Background art

An unmanned traveling working machine that performs work along a traveling route while being remotely controlled and traveling without an operator is known. This unmanned traveling working machine includes a working device and a traveling device which are driven by an engine; it receives operation signals from a remote transmitter located far from the machine body to change the engine speed and switch between forward travel and backward travel (see Patent Literature 1 mentioned below).

### Citation list

### Patent Literature

PTL1: Japanese Patent Application Laid-Open No. 2011-142900

### Summary of Invention

### Technical Problem

It is premised that the unmanned traveling working machine is used on a sloping site where it is unsafe for a working machine with an operator to perform work. However, the traveling device and the working device are driven by the engine, and the heavy engine is provided at the center of the machine body in the above-described prior art. The working device with the engine is moved up or down to adjust its height for mowing work.

Therefore, the position of the center of gravity of the machine body is significantly shifted up or down as the working device is moved up or down to adjust its height in the conventional unmanned traveling working machine. In particular, the working machine has a problem with unstable travel when the working device is moved up while the working machine travels on a sloping site because it is inclined at the angle that makes close to overturning.

The present invention is proposed to address the above-described problem. Therefore, an object of the invention is to enable the unmanned traveling working machine to travel stably on a sloping site even when the working device is moved up or down to adjust the height for mowing work and when the position of the center of gravity of the working device is shifted up or down during the work.

### Solution to Problem

To overcome the problem, an aspect of the invention provides an unmanned traveling working machine including a traveling device remotely controlled to perform traveling operation, a machine body configured to support the traveling device, a working device located at the center of the machine body and configured to be able to shift its center of gravity up and down, and heavy components provided dispersedly in the front side and the rear side of the machine body and serve as drive sources of the traveling device and the working device.

### Advantageous Effect of Invention

According to the invention having the above-described features, the unmanned traveling working machine can stably travel on a sloping site even when the center of gravity of the working device is shifted up or down to adjust the height for the mowing work.

### Brief Description of Drawings

Fig. 1 is a perspective view for schematically illustrating the overall configuration of an unmanned traveling working machine according to an embodiment of the invention;
Fig. 2 is a view for illustrating primary parts of the unmanned traveling working machine according to an embodiment of the invention;
Fig. 3 is a view for illustrating an elevator mechanism of a working device of the unmanned traveling working machine according to an embodiment of the invention; and
Fig. 4 is a view for illustrating the system configuration of the unmanned traveling working machine according to an embodiment of the invention.

### Description of Embodiments

Hereinafter, an embodiment of the present invention will be described with reference to the drawings. In the description below, the same reference numbers in the different drawings indicate the same functional parts, and therefore repeated description for each of the drawings is omitted.

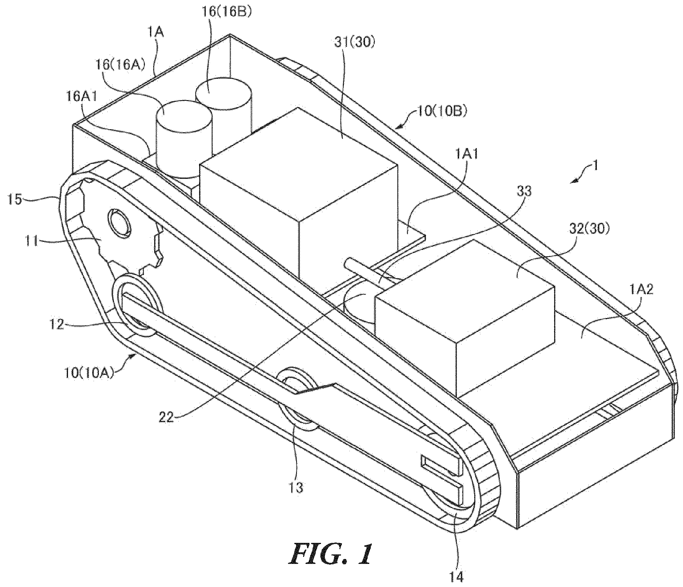

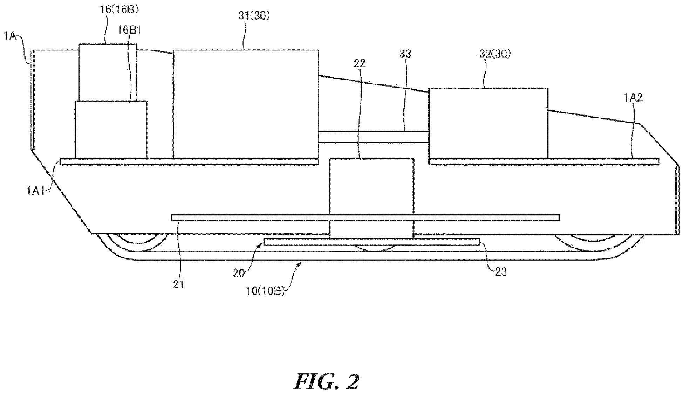

As illustrated in Fig. 1 and Fig. 2, an unmanned traveling working machine 1 includes a traveling device 10 (10A and 10B) configured to travel by remote control, a machine body 1A configured to support the traveling device 10 (10A and 10B), and a working device 20 located at the center of the machine body 1A. The working device 20 is supported by a working device deck 21. The working device deck 21 is supported by an elevator mechanism described later with respect to the machine body 1A so as to be able to move up and down, and therefore the center of gravity of the working device 20 can be shifted up and down.

The center of gravity of the working device 20 is shifted up or down not only when the working device 20 is raised or lowered, but also when heavy substances accumulated in a tank of the working device 20 are sprayed by the operation of the working device 20 and when the heavy substances are accumulated in the tank of the working device 20.

With the illustrated example, the traveling device 10 is a crawler type traveling device including a pair of right and left traveling parts 10A and 10B; each of the traveling parts 10A and 10B includes a drive sprocket 11 and driven wheels 12, 13, and 14, and a crawler 15 wound around them, and the drive sprockets 11 are driven by traveling device drive motors 16 (16A and 16B) respectively. However, this is by no means limiting.

The traveling device drive motors 16 include the traveling device drive motor 16A to drive the left traveling part 10A and the traveling device drive motor 16B to drive the right traveling part 10B. The traveling device drive motors 16A and 16B are supported by a front support 1A1 provided in the front side of the machine body 1A; they rotate the drive sprockets 11 of the traveling parts 10A and 10B via gearboxes 16A1 and 16B1 respectively.

With the illustrated example, the working device 20 includes a working device drive motor 22, a disc (not illustrated) rotated by the working device drive motor 22, and a mower blade 23 attached to the circumference of the disc. The working device 20 is configured to perform work for mowing grass on the ground along a traveling route while the machine body 1A is traveled by the traveling device 10. The working device 20 for the mowing work is not limited to this, but the mower blade 23 may be rotated directly by the working device drive motor 22, or the working device 20 may include a plurality of working device drive motors 22.

In addition, the working device 20 may perform any kind of work other than the mowing work, for example, work for spraying agent, fertilizing, and seeding while heavy substances are accumulated in a tank; and work for collecting objects such as balls scattered on the ground, and for collecting trash on the ground, as long as the center of gravity of the working device is shifted up or down while the work is performed along the traveling route.

The unmanned traveling working machine 1 includes heavy components 30 provided dispersedly in the front side and the rear side of the machine body 1A, which serve as drive sources of the traveling device 10 and the working device 20, respectively. For example, one of the heavy components 30 is an engine unit 31 and the other is a power generator unit 32. With this example, the engine unit 31 is placed on the front support 1A1 provided in the front side of the machine body 1A, and the power generator unit 32 is placed on the rear support 1A2 provided in the rear side of the machine body 1A. Another example of the heavy components 30 is a battery as a power source to drive the traveling device 10 and the working device 20. More than one battery may be provided dispersedly, or one battery and the other heavy component 30 may be combined and provided dispersedly.

The engine unit 31 is connected to the power generator unit 32 via a propeller shaft 33. The rotation of the output shaft of the engine unit 31 is transmitted to the power generator unit 32 via the propeller shaft 33 to actuate the power generator unit 32. Then, the power generator unit 32 outputs electric power to actuate the traveling device drive motor 16 and the working device drive motor 22.

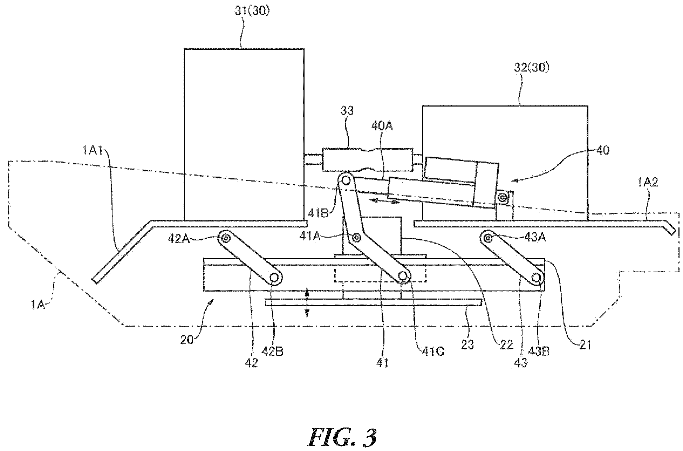

Fig. 3 is a view for illustrating an example of the elevator mechanism of the working device 20. With the illustrated example, the working device deck 21 of the working device 20 is supported dispersedly by a plurality of elevator links 42 and 43 with respect to the machine body 1A. One ends of the elevator links 42 and 43 are pivotably supported by fixed shafts 42A and 43A on the machine body 1A, and the other ends are pivotably supported by movable shafts 42B and 43B on the working device deck 21 respectively.

The working device deck 21 is coupled to an electric actuator 40 via a lever member 41. One end of the lever member 41 is pivotably supported by the movable shaft 41B on a telescopic rod 40A of the electric actuator 40; the other end of the lever member 41 is pivotably supported by the movable shaft 41C on the working device deck 21, and the intermediate part of the lever member 41 is pivotably supported by the fixed shaft 41A on the machine body 1A.

When the telescopic rod 40A of the electric actuator 40 is expanded or contracted, the working device 20 is moved up or down. The machine body 1A includes a moving space for the working device 20 provided between the front support 1A1 configured to support a front heavy component provided in the front side and the rear support 1A2 configured to support a rear heavy component provided in the rear side. The working device 20 is moved in this moving space, and therefore the upper end of the working device 20 can be raised to a level higher than the front support 1A1 and the rear support 1A2.

According to the unmanned traveling working machine 1 as described above, the plurality of heavy components 30 are provided dispersedly in the front side and the rear side of the machine body 1A; they are fixed to the front side support 1A1 and the rear support 1A2 respectively. Therefore, the weight of the unmanned traveling working machine 1 is evenly balanced. Even when the center of gravity of the working device 20 located at the center of the machine body 1A is shifted up or down, the height of the center of gravity of the unmanned traveling working machine 1 is not significantly changed. By this means, the unmanned traveling working machine 1 can travel stably on a sloping site even when the position of the center of gravity of the working device 20 is shifted up or down.

The height of the center of gravity of the front heavy component 30 provided in the front side of the machine body 1A is set depending on the height of the front support 1A1 installed on the machine body 1A. The height of the center of gravity of the rear heavy component 30 provided in the rear side of the machine body 1A is set depending on the height of the rear support 1A2 installed on the machine body 1A. In this case, the moving space for the working device 20 is independently provided between the front support 1A1 and the rear support 1A2. Therefore, it is possible to set the heights of the heavy components 30 from the ground depending on the positions of the front support 1A1 and the rear support 1A2 installed on the machine body 1A, independently of the positions of the working device 20 and the working device drive motor 22.

For this configuration, it is particularly preferred that the height of the center of gravity of the front heavy component is approximately the same as that of the rear heavy component. For this, the height of the front support 1A1 and the height of the rear support 1A2 are approximately the same as one another with respect to the machine body 1A in the up-and-down direction in the embodiment.

To raise or lower the working device 20, the telescopic rod 40A of the electric actuator 40 is expanded or contracted to swing the lever member 41 so that the working device deck 21 is moved up or down via the elevator links 42 and 43. In this case, the reaction force of the weight of the working device 20 is applied dispersedly to the fixed shafts 42A and 43A pivotably supporting the elevator links 42 and 43 on the machine body 1A. Thus, there is little fluctuation of the reaction force when the working device deck 21 is raised or lowered by the elevator links 42 and 43. By this means, the unmanned traveling working machine 1 can travel stably on a sloping site even when the working device 20 is moved up or down.

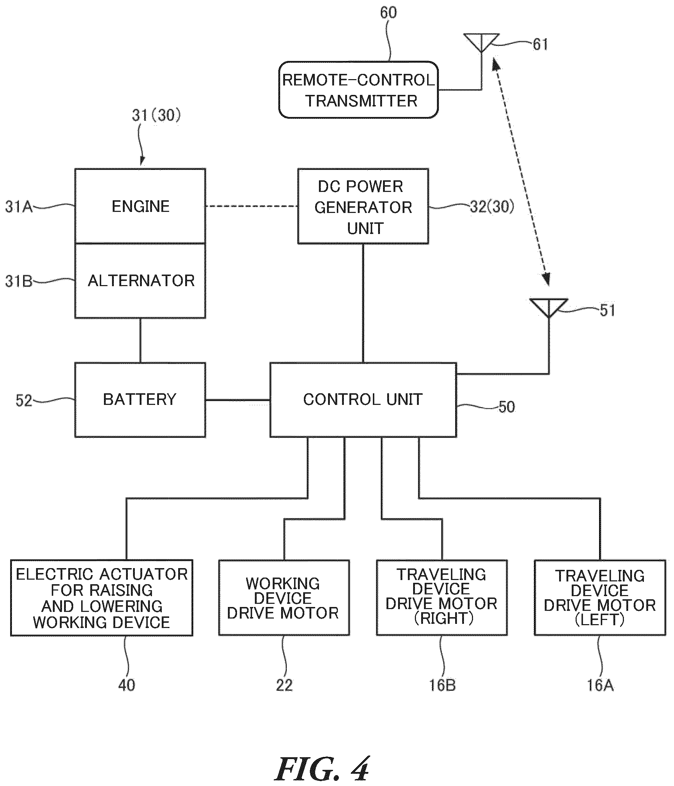

Fig. 4 is a view for illustrating the system configuration of the unmanned traveling working machine 1 according to an embodiment of the invention. In the unmanned traveling working machine 1, an operation signal transmitted wirelessly from a transceiver 61 of a remote-control transmitter 60 is received by a transceiver 51 of a control unit 50 of the machine body 1A, and the control unit 50 outputs a control signal in response to the operation signal.

Electric power supplied from a DC power generator of the power generator unit 32 placed on the machine body 1A serves as a power source of the control unit 50. In addition, a battery 52 provided in the machine body 1A serves as an auxiliary power source of the control unit 50. The battery 52 is charged with electric power from an alternator 31B which is rotated by the engine 31A of the engine unit 31. As described above, the engine 31A of the engine unit 31 is a drive source of the power generator unit 32.

The control unit 50 respectively applies drive currents to the electric actuator 40 for raising and lowering the working device, the working device drive motor 22, and the traveling device drive motors 16A and 16B depending on the control signals via a switching element (not illustrated) of the control unit 50 to control their operation.

The traveling device drive motors 16A and 16B are rotated forward or backward in the same direction to travel the unmanned traveling working machine 1 forward or backward. Here, the traveling speed of the unmanned traveling working machine 1 traveling forward or backward is controlled by controlling the rotational speed of the traveling device drive motors 16A and 16B. By controlling the balance between the rotational speed of the traveling device drive motors 16A and 16B, it is possible to steer the unmanned traveling working machine 1. It is also possible to turn the unmanned traveling working machine 1 there by rotating the traveling device drive motors 16a and 16B in the reverse direction.

The rotational speed of the mower blade 23 is controlled by controlling the rotational speed of the working device drive motor 22. The mower blade 23 is rotated forward or backward by rotating the working device drive motor 22 forward or backward.

When the unmanned traveling working machine 1 performs mowing work on a sloping site using the rotating mower blade 23 of the working device 20, the height of the mower blade 23 can be adjusted by moving the working device 20 up or down. Even when the height of the mower blade 23 is adjusted during the work on a sloping site, the weight of the machine body 1A is evenly balanced; and therefore, the unmanned traveling working machine 1 can travel stably and perform the work with a high degree of precision.

The traveling device drive motor 16 and the working device drive motor 22 are driven by the electric power generated by the power generator unit 32 in the present embodiment. That is, the traveling device 10 and the working device 20 are not driven directly by the output from engine 31A of the engine unit 31, but all the output from the engine 31A is accumulated in the power generator unit 32. The output shaft of the engine 31A is structurally separated from the working device 20 with this configuration. Therefore, the problem of instability caused by the engine and the working device moving up and down together as the conventional art is resolved.

As described above, the embodiments of the present invention have been described in detail with reference to the drawings. However, the specific configuration is not limited to the embodiments, and the design can be changed without departing from the scope of the present invention. In addition, the above-described embodiments can be combined by utilizing each other's technology as long as there is no particular contradiction or problem in the purpose and configuration.

### Reference Signs List

1: unmanned traveling working machine, 1A: machine body,
1A1: front support, 1A2: rear support,
10 (10A, 10B): traveling device, 11: drive sprocket,
12, 13, 14: driven wheel, 15: crawler,
16, 16A, 16B: traveling device drive motor,
20: working device, 21: working device deck,
22: working device drive motor, 23: mower blade,
30: heavy component, 31: engine unit,
31A: engine, 31B: alternator,
32: power generator unit, 33: propeller shaft
40: electric actuator, 40A: telescopic rod,
41: lever member, 42, 43: elevator link,
41B, 41C, 42B, 43B: movable shaft,
41A, 42A, 43A: fixed shaft,
50: control unit, 51: transceiver, 52: battery,
60: remote-control transmitter, 61: transceiver

## Claims

1. An unmanned traveling working machine comprising:
a traveling device remotely controlled to travel;
a machine body configured to support the traveling device;
a working device located at the center of the machine body and configured to be able to shift the center of gravity of the working device up and down; and
heavy components provided dispersedly in the front side and the rear side of the machine body and serve as drive sources of the traveling device and the working device.

2. The unmanned traveling working machine according to claim 1, wherein the working device is supported to be able to move up and down on the machine body.

3. The unmanned traveling working machine according to claim 2, wherein the machine body includes a moving space for the working device provided between a front support configured to support a front heavy component provided in the front side and a rear support configured to support a rear heavy component provided in the rear side.

4. The unmanned traveling working machine according to claim 3, wherein the upper end of the working device can be raised to a level higher than the front support and the rear support.

5. The unmanned traveling working machine according to claim 3, wherein the height of the front support is approximately the same as the height of the rear support in an up-and-down direction.

6. The unmanned traveling working machine according to claim 1, wherein the heavy components include an engine provided in either the front side or the rear side of the machine body and a power generator provided in the other side and rotated by the engine.

7. The unmanned traveling working machine according to claim 2, wherein the working device is supported dispersedly by a plurality of elevator links with respect to the machine body.

8. The unmanned traveling working machine according to claim 6, wherein the working device includes a motor driven by electric power supplied from the power generator and a mower blade rotated by the motor.
